# EUROPÄISCHE PATENTANMELDUNG

(11) **EP 1 110 651 A2**
(43) Veröffentlichungstag der Anmeldung: **27.06.2001**
(21) Anmeldenummer: 00811162.7
(22) Anmeldetag: 07.12.2000
(51) Int. Cl.: B23D 45/16

(54) **Handkreissäge**

(30) Priorität: 16.12.1999 DE 29922107 U
(71) Anmelder: HILTI Aktiengesellschaft, 9494 Schaan (LI)
(72) Erfinder: Spieth, Manfred, 82152 Martinsried (DE); Hartmann, Markus, 87665 Mauerstetten (DE); Haas, Günter, 86916 Kaufering (DE)
(74) Vertreter: Wildi, Roland

(57) **Zusammenfassung**

Eine Handkreissäge weist eine im wesentlichen rechteckige Grundplatte (2) auf, oberhalb der ein Gerätegehäuse (3) angeordnet ist, in dem ein Antriebsmotor und ein Getriebe untergebracht sind. Ein Kreissägeblatt (4), das an eine Antriebswelle des Motors angeflanscht ist, ragt teilweise durch einen Schlitz in der Grundplatte (2) der Handkreissäge (1). Ein Handgriff (6) ist mit dem Gerätegehäuse (3) verbunden. Die Axialprojektion des Gerätegehäuses (3) und des Handgriffs (6) liegen innerhalb der Axialprojektion der Grundplatte (2).

## Beschreibung

Die Erfindung betrifft eine Handkreissäge gemäss dem Oberbegriff des Schutzanspruchs 1.

Elektrisch betriebene Handkreissägen der gattungsgemässen Art weisen eine im wesentlichen rechteckige Grundplatte auf, oberhalb der ein Gerätegehäuse angeordnet ist, in dem ein Antriebsmotor, ein Getriebe und die gesamte Steuerelektrik und -elektronik untergebracht sind. Ein Kreissägeblatt ist an eine Antriebswelle des Motors angeflanscht und ragt teilweise durch einen Schlitz in der Grundplatte der Handkreissäge. Eine an der Grundplatte angelenkte, automatisch schwenkbare Abdeckvorrichtung gibt den unterhalb der Grundplatte verlaufenden Teil des Sägeblatts im Betrieb frei. Eine oberhalb der Grundplatte angeordnete feste Abdeckung verhindert, dass der Anwender in Berührung mit dem Kreissägeblatt kommt. Bei den aus dem Stand der Technik bekannten Handkreissägen sind zwei unterschiedliche Bauformen gebräuchlich. Bei der gebräuchlichsten Bauform ist der Motor rechtwinklig zum Sägeblatt angeordnet. Dabei überragt das Gerätegehäuse die Grundplatte seitlich. Die Handkreissägen dieser konventionellen Bauform sind üblicherweise für eine Einhandbedienung vorgesehen und besitzen einen Handgriff, der von der Oberseite des Gerätegehäuses abragt und etwa parallel zum Kreissägeblatt verläuft. Diese bekannte Bauform der Handkreissäge bedingt einen relativ grossen Bauraum. Durch das überstehende Gerätegehäuse ist die Handkreissäge nur eingeschränkt einsetzbar. Insbesondere kann im Betrieb die dem Sägeblatt gegenüberliegende Längsseite der Grundplatte nicht entlang einer Latte oder eines Balkens geführt werden. Indem das Gerätegehäuse die Grundplatte seitlich überragt, besteht auch die Gefahr einer Beschädigung der überstehenden Teile. Der Schwerpunkt der Handkreissäge liegt wegen des seitlich abragenden Motors relativ ungünstig. Dies kann im Betrieb zu einem vorzeitigen Ermüden des Hand-Arm-Systems des Anwenders führen. Wegen der relativ hohen Bauweise besteht auch eine gewisse Gefahr, dass die Handkreissäge im Betrieb nicht völlig plan geführt wird. Dies kann zu unbefriedigenden Schnittergebnissen führen.

Bei der weniger oft anzutreffenden zweiten Bauform für Handkreissägen ist der Motor parallel zum Sägeblatt angeordnet. Bei dieser Motoranordnung erstreckt sich auch das Gerätegehäuse parallel zum Sägeblatt und überragt die Grundplatte an ihrer der Sägerichtung abgewandten Seite. Derartige Handkreissägen besitzen zwei Handgriffe, von denen einer in Verlängerung des Gerätegehäuses angebracht ist und von diesem entgegen der Sägerichtung abragt. Der zweite Handgriff ist oberhalb des Gerätegehäuses angeordnet und erstreckt sich im wesentlichen senkrecht zum Sägeblatt. Die Griffanordnung bedingt bei diesen Handkreissägen eine Zweihandbedienung, da insbesondere der in Verlängerung des Gerätegehäuses abragende Handgriff sehr weit vom Schwerpunkt der Handkreissäge entfernt ist. Dadurch benötigt der Anwender immer beide Hände zum Halten der Handkreissäge und hat keine Hand frei, eine Führungsschiene oder das zu sägende Werkstück festzuhalten. Der entgegen der Sägerichtung abragende Handgriff überragt die Grundplatte relativ weit und ist dadurch stark gefährdet, im Betrieb beschädigt zu werden. Dies kann sogar zur Freilegung stromführender Bauteile des Gerätes führen. Die Grundplatte wird meist auch seitlich vom zweiten Handgriff überragt. Dadurch ergeben sich die gleichen Nachteile wie bei den Handkreissägen mit quer angeordnetem Gerätegehäuse.

Aufgabe der vorliegenden Neuerung ist es daher, diesen Nachteilen des Stands der Technik abzuhelfen. Es soll eine Handkreissäge geschaffen werden, die eine möglichst kompakte und stabile Bauform aufweist. Die Handkreissäge soll dem Anwender eine möglichst einfache und sichere Handhabung erlauben.

Die Lösung dieser Aufgaben erfolgt durch eine Handkreissäge, die insbesondere die im kennzeichnenden Abschnitt des Schutzanspruchs 1 angeführten Merkmale aufweist. Bevorzugte Ausführungsformen und/oder Weiterbildungen der neuerungsgemässen Handkreissäge sind Gegenstand der abhängigen Ansprüche. Insbesondere wird durch die Neuerung eine Handkreissäge geschaffen, die eine im wesentlichen rechteckige Grundplatte aufweist, oberhalb der ein Gerätegehäuse angeordnet ist, in dem ein Antriebsmotor und ein Getriebe untergebracht sind. Ein Kreissägeblatt, das an eine Antriebswelle des Motors angeflanscht ist, ragt teilweise durch einen Schlitz in der Grundplatte der Handkreissäge. Ein Handgriff ist mit dem Gerätegehäuse verbunden. Die Axialprojektion des Gerätegehäuses und des Handgriffs liegen innerhalb der Axialprojektion der Grundplatte.

Die Handkreissäge weist eine neuartige Bauform auf, bei der keine Gehäuseteile die Grundplatte überragen. Daraus ergibt sich eine sehr kompakte Bauweise. Durch die neuerungsgemässe Bauform kann auch die dem Sägeblatt gegenüberliegende Längsseite der Grundplatte an einer Latte oder an einem Balken entlanggeführt werden. Dies ist insbesondere dann von Vorteil, wenn gerade keine Führungsschiene, auf die das Gerät aufsetzbar ist, zur Hand ist. Durch die kompakte Bauweise ist auch die Einhandbedienbarkeit der Handkreissäge gewährleistet. Die zweite Hand des Anwenders bleibt frei, beispielsweise um das zu sägende Werkstück zu halten. Die Gefahr einer Beschädigung von über die Grundplatte vorstehenden Gehäuseteilen ist durch die gewählte Bauweise völlig gebannt.

Indem das Gerätegehäuse im wesentlichen parallel zum Sägeblatt ausgerichtet ist, ergibt sich eine besonders schlanke Bauform für die Handkreissäge. Dies erleichtert den Einsatz des Geräts bei beengten Platzverhältnissen und kommt gesamthaft der einfacheren Bedienbarkeit zugute.

Mit Vorteil ist der Handgriff oberhalb des Gerätegehäuses derart in Nachbarschaft zum Motor angeordnet, dass seine Axialprojektion den Massenschwerpunkt des Geräts überdeckt. Die Anordnung des Handgriffs über dem Schwerpunkt des Geräts erleichtert die Handhabung noch weiter. Die Ausgewogenheit der Handkreissäge lässt das Hand-Arm-System des Anwenders weniger schnell ermüden. Auch einem versehentlichen Verkippen des Geräts ist durch die neuerungsgemässe Anordnung des Handgriffs begegnet.

Aus Gründen der besseren Handhabbarkeit und der ermüdungsfreien Bedienbarkeit der Handkreissäge im Einhandbetrieb erweist sich eine etwa parallel zum Sägeblatt verlaufende Ausrichtung des Handgriffs von Vorteil.

In einer Variante der Neuerung ist die Handkreissäge als eine Tauchsäge ausgebildet und weist ein gegen die Rückstellkraft einer Rückstellfeder gegen die Grundplatte schwenkbares Gerätegehäuse auf. Auf diese Weise ist die Eintauchtiefe des Kreissägeblatts in das zu schneidende Werkstück verstellbar.

Im Folgenden wird die Neuerung unter Bezugnahme auf ein in den Zeichnungen schematisch dargestelltes Ausführungsbeispiel näher erläutert. Es zeigen in nicht massstabsgetreuer Darstellung:
- Fig. 1 und 2: zwei Axialprojektionen von Bauformen von Handkreissägen des Stands der Technik; und
- Fig. 3: eine Axialprojektion einer Handkreissäge gemäss der Neuerung.

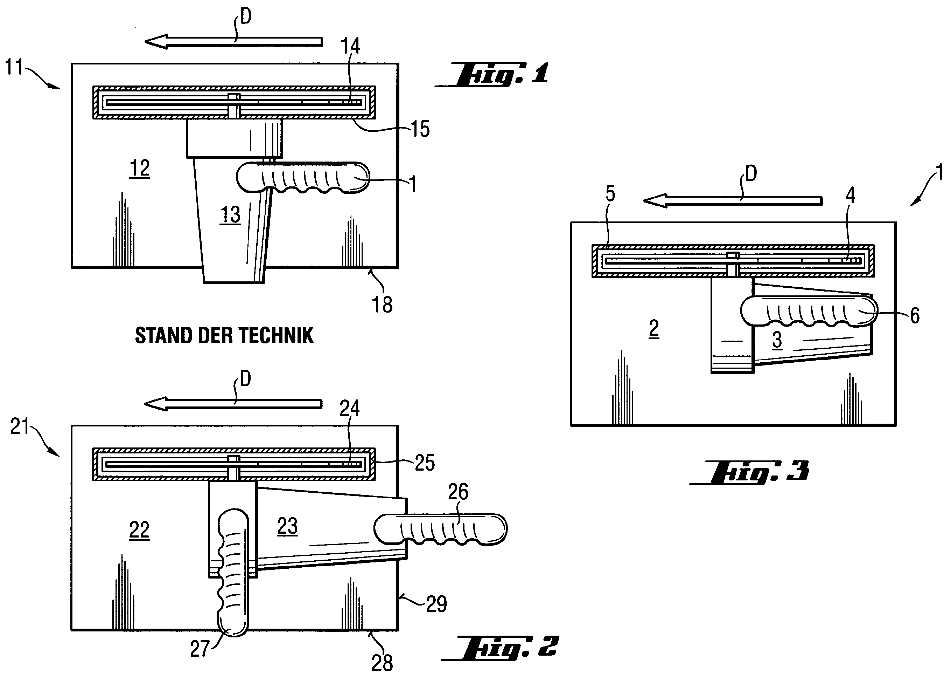

In Fig. 1 und 2 sind die beiden, bislang im Stand der Technik gebräuchlichen Bauformen für Handkreissägen schematisch angedeutet. Die in Fig. 1 dargestellte Handkreissäge trägt dabei gesamthaft das Bezugszeichen 11. Sie weist eine im Wesentlichen rechteckige Grundplatte 12 auf, oberhalb der ein Gerätegehäuse 13 angeordnet ist. In dem Gerätegehäuse 13 sind ein Antriebsmotor, ein Getriebe und die gesamte Steuerelektrik und -elektronik untergebracht. Ein Kreissägeblatt 14 ist an eine Antriebswelle des Motors angeflanscht und ragt teilweise durch einen Schlitz in der Grundplatte 12 der Handkreissäge 11. Eine oberhalb der Grundplatte 12 angeordnete feste Abdeckung 15 verhindert, dass der Anwender in Berührung mit dem Kreissägeblatt 14 kommt. An der Oberseite des Gerätegehäuses 12 ist ein Handgriff 16 befestigt, der etwa parallel zum Kreissägeblatt 14 angeordnet ist. Der Handgriff 16 ist üblicherweise aussermittig zum Gerätegehäuse angebracht und entgegen der mit dem Pfeil D bezeichneten Sägerichtung, zum rückwärtigen Abschnitt der Grundplatte 12 hin, verschoben. Wie aus Fig. 1 ersichtlich ist, erstreckt sich das Gerätegehäuse 13 senkrecht zum Kreissägeblatt 14 und zur Sägerichtung D. Dies ist die häufigste Bauform, bei der der Antriebsmotor senkrecht zum Kreissägeblatt 14 angeordnet ist. Dabei überragt das Gerätegehäuse 13 die Grundplatte 12 an ihrer dem Kreissägeblatt 14 gegenüberliegenden Längsseite 18.

Fig. 2 zeigt schematisch eine zweite, seltener anzutreffende Bauform der bekannten Handkreissägen, die gesamthaft mit dem Bezugszeichen 21 versehen ist. Sie weist wiederum eine Grundplatte 22 auf, oberhalb der ein Gerätegehäuse 23 für einen Antriebsmotor, ein Getriebe und die gesamte Steuerelektrik und -elektronik angeordnet ist. Das Gerätegehäuse 23 ist parallel zu einem Kreissägeblatt 24 angeordnet, dass an eine Antriebswelle des Antriebsmotors angeflanscht ist. Die Längsanordnung des Gerätegehäuses 23 ergibt sich aufgrund der Anordnung des Antriebsmotors, der gleichfalls parallel zum Kreissägeblatt 24 verläuft. Ein Umlenkgetriebe sorgt für die Übertragung der Rotation des Motors auf das Kreissägeblatt 24. Eine oberhalb der Grundplatte 22 vorgesehene feste Abdeckung für das Kreissägeblatt 24 ist mit dem Bezugszeichen 25 angedeutet. Das längs angeordnete Gerätegehäuse 23 überragt die, bezogen auf die Sägerichtung D, rückwärtige Querseite 29 der Grundplatte 22. Ein Haupthandgriff 26 schliesst in Längsrichtung an das Gerätegehäuse 22 an und verlängert die Bauweise dieses bekannten Typs einer Handkreissäge 21 noch weiter. Infolge des grossen Abstands des Haupthandgriffs 26 vom Geräteschwerpunkt ist ein zusätzlicher Handgriff 27 vorgesehen, der oberhalb des Gerätegehäuses 22 angeordnet ist und senkrecht zum Kreissägeblatt 24 orientiert ist. Wie aus Fig. 2 ersichtlich ist, überragt der zusätzliche Handgriff 27 die dem Kreissägeblatt 24 gegenüberliegende Längsseite 28 der Grundplatte 22.

Fig. 3 zeigt eine Handkreissäge 1, die gemäss der Neuerung modifiziert ist. In Entsprechung zu den Bezeichnungen in Fig. 1 und 2 trägt die Grundplatte das Bezugszeichen 2. Oberhalb der Grundplatte 2 ist ein Gerätegehäuse 3 für einen Antriebsmotor, ein Getriebe und die gesamte Steuerelektrik und -elektronik angeordnet. Eine oberhalb der Grundplatte 2 montierte Abdeckung 5 verdeckt ein mit dem Bezugszeichen 4 versehenes Kreissägeblatt, das an eine Antriebswelle des innerhalb des Gerätegehäuses 3 angeordneten Antriebsmotors angeflanscht ist. Die Anordnung des Gerätegehäuses 3 ist derart gewählt, dass es in der Axialprojektion innerhalb der Grenzen der Grundplatte 2 liegt. Wie aus Fig. 3 ersichtlich ist, erweist sich dabei eine Längsanordnung des Gerätegehäuses 3 und des Antriebsmotors, parallel zum Kreissägeblatt 4 und der mit dem Pfeil D bezeichneten Sägerichtung, als vorteilhaft. Ein mit dem Bezugszeichen 6 versehener Handgriff ist an der Oberseite des Gerätegehäuses 3 befestigt. Der Handgriff 6 ist etwa parallel zum Kreissägeblatt 4 ausgerichtet und zur rückwärtigen Hälfte der Grundplatte 2 hin verschoben angeordnet. Die Anordung des Handgriffs 6 ist dabei derart gewählt, dass er sich über den Massenschwerpunkt der Handkreissäge 1 erstreckt. Dies verleiht dem einhandbedienbaren Gerät eine besonders ausgewogene Bauform und erleichtert seine Handhabung. In einer Variante der Neuerung weist die Handkreissäge zusätzlich zu der Gehrungsverstellung eine schwenkbare Anlenkung des Gerätegehäuses 3 an der Grundplatte 2 auf. Diese Schwenkbarkeit gegen die Rückstellkraft einer Rückstellfeder verändert den Überstand des durch den Längsschlitz in der Grundplatte 2 ragenden Teils des Kreissägeblatts 4 und dient zum tieferen Eintauchen des Kreissägeblatts 4 in das zu schneidende Werkstück.

## Patentansprüche

1. Handkreissäge mit einer im wesentlichen rechteckigen Grundplatte (2), oberhalb der ein Gerätegehäuse (3) angeordnet ist, in dem ein Antriebsmotor und ein Getriebe untergebracht sind, und einem Kreissägeblatt (4), das an eine Antriebswelle des Motors angeflanscht ist und teilweise durch einen Schlitz in der Grundplatte (2) der Handkreissäge (1) ragt, sowie mit einem, mit dem Gerätegehäuse (3) verbundenen Handgriff (6), **dadurch gekennzeichnet,** dass die Axialprojektion des Gerätegehäuses (3) und des Handgriffs (6) innerhalb der Axialprojektion der Grundplatte (2) liegen.

2. Handkreissäge nach Anspruch 1, dadurch gekennzeichnet, dass das Gerätegehäuse (3) im Wesentlichen parallel zum Sägeblatt (4) ausgerichtet ist.

3. Handkreissäge nach Anspruch 1 oder 2, dadurch gekennzeichnet, dass der Handgriff (6) oberhalb des Gerätegehäuses (3) derart in Nachbarschaft zum Motors angeordnet ist, dass seine Axialprojektion den Massenschwerpunkt des Geräts überdeckt.

4. Handkreissäge nach Anspruch 3, dadurch gekennzeichnet, dass der Handgriff (6) etwa parallel zum Kreissägeblatt (4) ausgerichtet ist.

5. Handkreissäge nach einem der vorangehenden Ansprüche, dadurch gekennzeichnet, dass das Gerätegehäuse (3) gegen die Rückstellkraft einer Feder schwenkbar an der Grundplatte (2) angelenkt ist.
